# FASCICULE DE BREVET EUROPEEN

(11) **EP 2 603 698 B1**
(45) Date de publication et mention de la délivrance du brevet: **07.10.2015**
(21) Numéro de dépôt: 11752308.4
(22) Date de dépôt: 27.07.2011
(51) Int. Cl.: F03H 1/00, B64G 1/40

(54) **PROPULSEUR ELECTRIQUE, PROCEDE D'ARRET D'UN MOTEUR ELECTRIQUE COMPRIS DANS UN TEL PROPULSEUR ET SATELLITE COMPRENANT UN TEL PROPULSEUR**
ELEKTRISCHE SCHUBDÜSE, VERFAHREN ZUM STOPPEN EINES ELEKTROMOTORS IN EINER DERARTIGEN SCHUBDÜSE UND SATELLIT MIT EINER DERARTIGEN SCHUBDÜSE
ELECTRIC THRUSTER, METHOD FOR STOPPING AN ELECTRIC MOTOR INCLUDED IN SUCH A THRUSTER, AND SATELLITE COMPRISING SUCH A THRUSTER

(30) Priorité: 12.08.2010 FR 1056577
(43) Date de publication de la demande: 19.06.2013
(73) Titulaire: Snecma, 75015 Paris (FR)
(72) Inventeur: MARCHANDISE, Frédéric, F-27200 Vernon (FR); OBERG, Michael, F-27940 Port Mort (FR); PASSAGOT, Gérard, F-27200 Vernon (FR)
(74) Mandataire: Delumeau, François Guy
(86) Numéro de dépôt international: PCT/FR2011/051812
(87) Numéro de publication internationale: WO 2012/020190

(56) Documents cités:
- WO-A1-2009/037196
- US-A- 5 339 623
- US-B1- 6 301 876
- POLK J E ET AL: "In-flight performance of the NSTAR ion propulsion system on the deep space one mission", AEROSPACE CONFERENCE PROCEEDINGS, 2000 IEEE MARCH 18-25, 2000, PISCATAWAY, NJ, USA,IEEE, vol. 4, 18 mars 2000 (2000-03-18), pages 123-147, XP010517628, ISBN: 978-0-7803-5846-1

## Description

### Arrière-plan de l'invention

La présente invention se situe dans le domaine des moteurs à propulsion électrique.

Elle s'applique de façon privilégiée mais non limitative à un moteur à propulsion ionique ou plasmique du type de ceux utilisés pour la propulsion électrique spatiale, en particulier pour la propulsion des satellites géostationnaires de télécommunication.

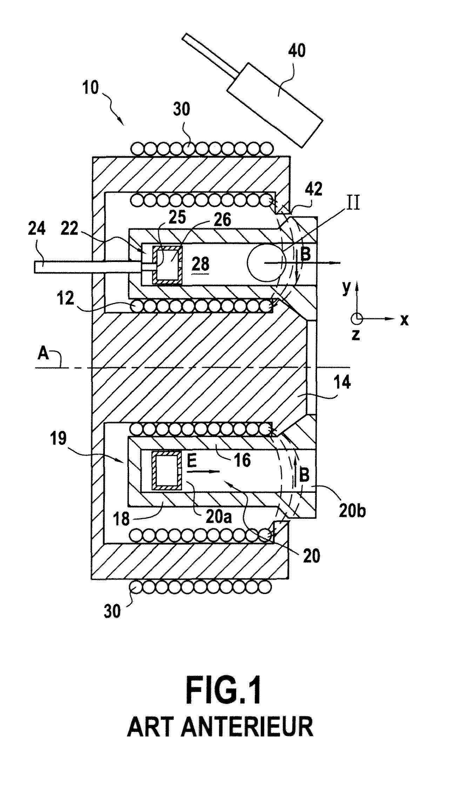

La **figure 1** illustre de façon générale un propulseur plasmique à effet Hall 10 de l'état de la technique. Un bobinage magnétique central 12 entoure un noyau central 14 s'étendant selon un axe principal longitudinal A. Une paroi interne annulaire 16 encercle le bobinage central 12. Cette paroi interne 16 est entourée par une paroi annulaire externe 18, les parois annulaires 16 et 18 délimitant un canal de décharge annulaire 20 s'étendant autour de l'axe principal A. Dans l'exemple décrit ici, la paroi interne 16 et la paroi externe 18 font partie d'une unique pièce en céramique 19.

Dans la suite de la description, le terme "interne" désigne une partie proche de l'axe principal A et le terme "externe" une partie éloignée de cet axe.

Egalement, les termes "amont" et "aval" sont définis par rapport au sens d'écoulement normal du gaz (de l'amont vers l'aval) à travers le canal de décharge 20.

L'extrémité amont 20a du canal de décharge 20 (à gauche sur la figure 1) est refermée par un système d'injection 22 composé d'une canalisation 24 d'amenée du gaz ionisable (en général du xénon), la canalisation 24 étant reliée par un trou d'alimentation 25 à une anode 26 servant de distributeur pour l'injection des molécules de gaz dans le canal de décharge 20.

L'extrémité aval 20b du canal de décharge 20 est ouverte (à droite sur la figure 1).

Plusieurs bobinages magnétiques périphériques 30 présentant un axe parallèle à l'axe principal A sont disposés tout autour de la paroi externe 18. Le bobinage magnétique central 12 et les bobinages magnétiques externes permettent de générer un champ magnétique radial B dont l'intensité est maximale au niveau de l'extrémité aval 20b du canal de décharge 20.

Une cathode creuse 40 est disposée à l'extérieur des bobinages périphériques 30, sa sortie étant orientée afin d'éjecter des électrons en direction de l'axe principal A et de la zone située en aval de l'extrémité aval 20b du canal de décharge 20. Il est établi une différence de potentiel entre la cathode 40 et l'anode 26.

Les électrons ainsi éjectés sont en partie dirigés à l'intérieur du canal de décharge 20. Certains de ces électrons parviennent, sous l'influence du champ électrique généré entre la cathode 40 et l'anode 26 jusqu'à l'anode 26 tandis que la majorité d'entre eux sont piégés par le champ magnétique B intense au voisinage de l'extrémité aval 20b du canal de décharge 20.

Les molécules de gaz circulant de l'amont vers l'aval dans le canal de décharge 20 sont ionisées par les électrons avec lesquels elles entrent en collision.

Par ailleurs, les électrons présents dans le canal de décharge 20 créent un champ électrique E axial qui accélère les ions entre l'anode 26 et la sortie aval 20b du canal de décharge 20 de telle sorte que ces ions sont éjectés à grande vitesse du canal de décharge 20, ce qui engendre la propulsion du moteur.

L'invention vise plus particulièrement le système d'alimentation du propulseur électrique.

De façon préliminaire, il faut noter que les propulseurs actuels ont besoin d'un faible débit de gaz régulé pour obtenir une poussée constante. Ce débit est créé à partir d'un réservoir et d'un régulateur de pression qui amène la pression dans un domaine constant, le débit étant ensuite régulé pour fournir la quantité de gaz nécessaire au moteur et à la cathode creuse. Cette régulation est usuellement faite par un thermocapillaire alimenté en courant et par un restricteur de débit permettant une répartition entre l'anode et la cathode.

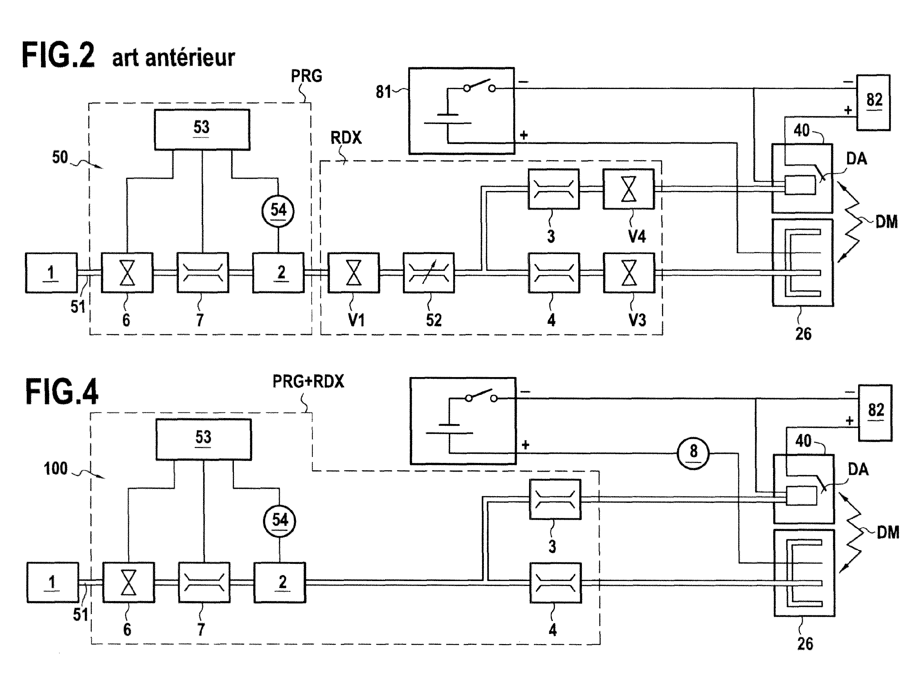

La **figure 2** illustre un système d'alimentation 50 du propulseur électrique 10 conforme à l'état de la technique.

Ce système d'alimentation 50 comporte un réservoir haute pression 1 de gaz ionisable, par exemple de xénon ou de krypton, relié, par une canalisation 51, à un réservoir tampon basse pression 2.

Le volume du réservoir tampon basse pression 2 est de 1 litre environ.

La pression dans le réservoir haute pression 1 varie de 150 bars à 1 bar environ ; celle dans le réservoir tampon basse pression 2 varie entre 1,5 et 3 bars environ.

Un restricteur 7 est placé sur la canalisation 51 pour détendre la pression entre le réservoir haute pression 1 et le réservoir tampon basse pression 2.

La canalisation 51 comporte également une vanne de régulation 6 du débit de gaz entre le réservoir haute pression 1 et le réservoir tampon basse pression 2.

Le système d'alimentation 50 comporte des moyens 53 pour contrôler l'ouverture et la fermeture de la vanne de régulation 6 et mesurer la pression dans le réservoir tampon basse pression 2 en coopération avec un capteur de pression 54.

Le système d'alimentation 50 comporte, en aval du réservoir tampon basse pression 2, deux vannes d'arrêt V3, V4 une vanne d'arrêt redondante V1 et un thermocapillaire 52 permettant un réglage fin du débit de gaz vers l'anode 26 et la cathode 40 respectivement.

Des restricteurs 3 et 4 respectivement associés à l'anode 26 et à la cathode 40 permettent de répartir le débit de gaz entre la cathode et l'anode, à savoir environ 8 à 10% vers la cathode et 90 à 92% vers l'anode.

Le système d'alimentation 50 comporte aussi une électronique de puissance 81 apte à mettre le moteur sous tension et une électronique d'allumage 82 apte à établir un courant de décharge entre l'anode 26 et la cathode 40. Un logiciel de pilotage permet le séquençage de l'allumage du moteur et le contrôle des vannes pour fournir le gaz et l'électricité au propulseur selon un enchaînement déterminé.

Sur la figure 2 on a référencé DA la décharge d'allumage, nécessaire au démarrage uniquement, et DM la décharge moteur établie entre l'anode 26 et la cathode 40.

On notera que dans le cas d'un moteur plasma à effet Hall, l'électronique 81, 82 précitée est souvent éloignée du propulseur, une unité de filtrage étant utilisée entre le moteur et l'électronique de puissance pour éviter les perturbations électromagnétiques.

De façon usuelle, le sous-système constitué par la vanne de régulation 6, le restricteur 7, le réservoir tampon basse pression 2, les moyens 53 pour contrôler l'ouverture et la fermeture de la vanne de régulation 6 et le capteur de pression 54 constitue une unité de régulation de pression PRG.

De même, la vanne d'arrêt V1, le thermocapillaire 52 les restricteurs 3, 4, et les vannes V3, V4, constituent une unité RDX de régulation du débit en gaz ionisant.

Le propulseur et le système d'allumage tels que décrits ci-dessus présentent certains inconvénients.

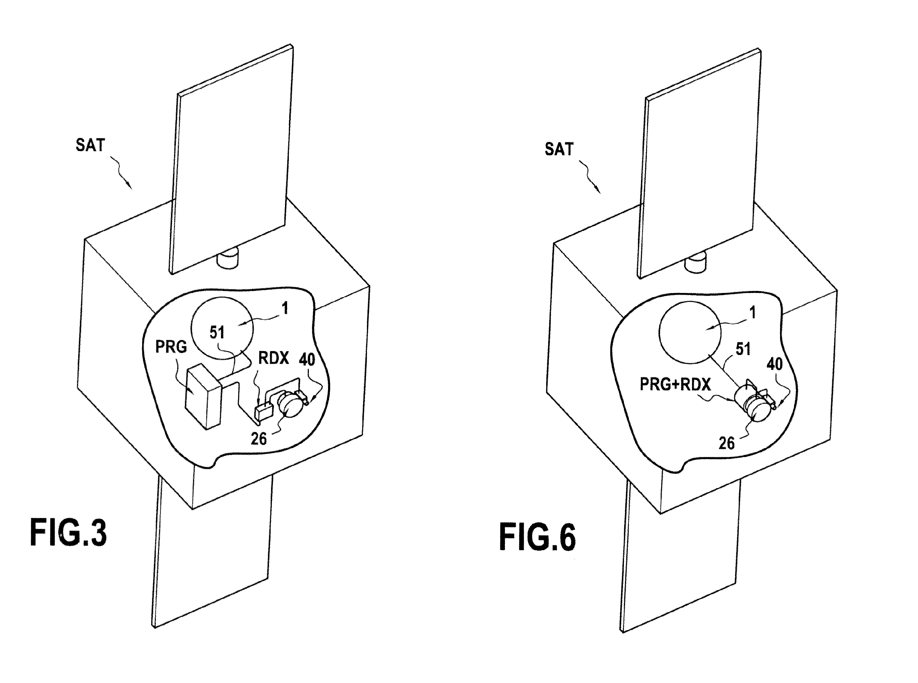

En premier lieu, l'encombrement associé au volume du réservoir tampon basse pression 2, typiquement 1 litre, impose que celui-ci soit déporté dans le satellite nécessitant des liaisons tubulaires supplémentaires au niveau du satellite. Cet agencement est illustré schématiquement à la **figure 3** sur laquelle un satellite SAT présente une liaison tubulaire entre l'unité de régulation PRG et l'unité RDX de régulation du débit en gaz ionisant.

En deuxième lieu, le système d'alimentation 50 impose la présence de vannes en aval du réservoir tampon (du type des vannes V1, V3 et V4) pour éviter de perdre le gaz stocké dans le réservoir tampon basse pression 2 lors de l'arrêt du moteur, ces vannes étant fermées en pratique, simultanément ou quasi simultanément avec la coupure de l'alimentation de la puissance du moteur.

WO 2009/037196 A1 décrit un propulseur électrique selon le préambule de la revendication 1.

### Objet et résumé de l'invention

L'invention propose un propulseur électrique qui ne présente pas les inconvénients mentionnés ci-dessus.

Plus précisément, et selon un premier aspect, l'invention concerne un propulseur électrique comprenant :
- au moins un moteur électrique comprenant une anode, une cathode et un distributeur de gaz ; et
- un système d'alimentation de ce moteur comportant :
   - un réservoir haute pression de gaz ionisable ;
   - un réservoir tampon basse pression relié au réservoir haute pression via des moyens de détente de la pression du gaz ;
   - au moins une vanne apte à ouvrir, fermer, ou réguler, le débit de gaz entre le réservoir haute pression et le réservoir tampon basse pression;
   - un système de canalisations pour acheminer le gaz du réservoir tampon basse pression vers le moteur ;
- une électronique de puissance apte à mettre ledit moteur sous et hors tension en appliquant ou en coupant une tension de décharge entre l'anode et la cathode.

Conformément à l'invention, le réservoir tampon basse pression est en liaison ouverte avec le distributeur de gaz et le propulseur comporte des moyens pour détecter que l'intensité du courant du décharge entre l'anode et la cathode est inférieure à une valeur seuil et pour couper la tension de décharge entre l'anode et la cathode suite à cette détection.

Corrélativement, l'invention vise aussi un procédé de contrôle d'un moteur électrique comportant une anode, une cathode et un distributeur de gaz, ce moteur étant compris dans un propulseur électrique comportant en outre :
- un système d'alimentation du moteur, ce système d'alimentation comportant :
   - un réservoir haute pression de gaz ionisable ;
   - un réservoir tampon basse pression relié au réservoir haute pression via des moyens de détente de la pression dudit gaz et en liaison ouverte avec le distributeur de gaz ;
   - au moins une vanne apte à ouvrir, fermer, ou réguler, le débit de gaz entre le réservoir haute pression et le réservoir tampon basse pression; et
   - un système de canalisations pour acheminer le gaz du réservoir tampon basse pression vers le distributeur de gaz; et
- une électronique de puissance apte à mettre le moteur sous et hors tension en appliquant ou en coupant une tension de décharge entre l'anode et la cathode.

Conformément à l'invention, ce procédé de contrôle du moteur comporte :
- une étape de fermeture de la vanne pour interrompre le débit de gaz entre le réservoir haute pression et le réservoir tampon basse pression;
- une étape de détection d'une 'intensité du courant du décharge entre l'anode et la cathode inférieure à une valeur seuil ; et
- une étape de coupure de ladite tension de décharge suite à cette détection.

Dans ce document, les termes "anode" et "cathode" sont à interpréter de la façon suivante:
Le terme "anode" désigne le circuit fluide en relation avec le côté anode du moteur dans le cas d'un moteur à propulsion plasmique et le circuit fluide en relation avec le côté chambre d'ionisation du moteur dans le cas d'un moteur à propulsion ionique.

Le terme "cathode" désigne le circuit fluide en relation avec le côté cathode du moteur dans le cas d'un moteur à propulsion plasmique et le circuit fluide en relation avec la cathode de la chambre d'ionisation et la cathode de neutralisation du moteur dans le cas d'un moteur à propulsion ionique.

Ainsi, et d'une façon générale, l'invention propose de supprimer les vannes en aval du réservoir tampon basse pression, autrement dit les vannes placées entre le réservoir tampon basse pression et l'anode d'une part, et entre le réservoir tampon basse pression et la cathode d'autre part.

L'homme du métier comprendra ainsi que l'expression "liaison ouverte" désigne tout type de canalisation non-équipée de vanne ou équipée d'une vanne ouverte en permanence.

Conformément à l'invention, l'arrêt du moteur s'effectue en fermant les vannes entre le réservoir haute pression et le réservoir tampon basse pression, sans interrompre l'électronique de puissance. Le débit de gaz en décroissance entraîne une diminution de l'intensité du courant de décharge, puis, seulement lorsque cette intensité est inférieure à un seuil, l'alimentation est coupée.

Ce fonctionnement qui peut être qualifié de « blow down » évite toute perte de gaz, le réservoir tampon basse pression étant entièrement vidé avant la coupure de l'alimentation. Le fluide propulsif est ainsi utilisé à plein rendement.

Dans un mode préféré de réalisation, le propulseur électrique selon l'invention comporte un organe de régulation (typiquement une vanne) entre le réservoir haute pression et le réservoir tampon basse pression et des moyens de contrôle de cet organe permettant d'obtenir en sortie du réservoir tampon basse pression une pression variant d'une amplitude de moins de 5% autour d'une pression de consigne. Un capteur de pression mesure la pression dans le réservoir tampon basse pression.

Dans ce mode de réalisation, au démarrage, on ouvre l'organe de régulation tant que la pression de consigne n'est pas atteinte, puis on ajuste en permanence l'ouverture de l'organe de régulation pour tendre vers la pression de consigne dans le réservoir tampon basse pression.

Dans un mode préféré de réalisation, le propulseur électrique selon l'invention comporte un restricteur entre le réservoir haute pression et le réservoir tampon basse pression, de manière à limiter l'écoulement vers le réservoir tampon basse pression. On peut alors utiliser un réservoir tampon basse pression de capacité bien inférieure à celle des propulseurs électriques connus, par exemple inférieure à 20 cm³, tout en gardant une bonne précision au niveau de la pression dans le réservoir tampon, garant d'un écoulement vers l'anode et la cathode selon un débit quasiment stable.

Un réservoir tampon basse pression de petit volume est très avantageux car il peut être intégré au moteur lui-même, de façon compacte.

Bien entendu, le débit peut être ajusté en faisant varier la pression de consigne.

### Brève description des dessins

D'autres caractéristiques de l'invention apparaîtront à la lumière de la description faite ci-dessous en référence aux dessins annexés qui en illustrent un exemple de réalisation dépourvu de tout caractère limitatif et dans lesquels :
- la figure 1 déjà décrite représente un propulseur plasmique de l'état de la technique ;
- la figure 2 déjà décrite représente un système d'alimentation du propulseur plasmique de la figure 1;
- la figure 3 déjà décrite représente schématiquement un satellite de l'état actuel de la technique ;
- la figure 4 représente un système d'alimentation pouvant être utilisé dans un propulseur électrique conforme à un mode particulier de réalisation de l'invention;
- la figure 5 illustre l'évolution de la poussée d'un propulseur plasmique alimenté par un système conforme à celui de la figure 3;
- la figure 6 représente schématiquement un satellite conforme à l'invention ;
- la figure 7 représente un système d'alimentation pouvant être utilisé dans un propulseur électrique comportant deux moteurs et conforme à un autre mode particulier de réalisation de l'invention;
- la figure 8 représente sous forme d'organigramme les principales étapes d'un procédé d'arrêt d'un moteur électrique conforme à un mode particulier de réalisation de l'invention.

### Description détaillée d'un mode de réalisation de l'invention

La **figure 4** représente un système d'alimentation 100 pouvant être utilisé dans un propulseur électrique conforme à l'invention.

Il se distingue notamment du système d'alimentation 50 de la figure 2 en ce que le réservoir tampon basse pression 2 est en permanence en liaison ouverte avec l'anode 26 et avec la cathode 40, les vannes V1, V3 et V4 ayant été supprimées.

Le système d'alimentation 100 comporte en outre des moyens 8 de mesure de l'intensité de décharge, placés en série sur le circuit constitué par l'électronique de puissance 81, l'anode 26 et la cathode 40.

Dans l'état initial du système, la vanne de régulation 6 est fermée ; le réservoir tampon basse pression 2, les restricteurs 7, 3 et 4 sont soumis à une très basse pression résiduelle.

Préférentiellement on minimise le volume net entre la vanne de régulation 6 et le restricteur 7 pour garder une bonne précision au niveau de la pression dans le réservoir tampon 2.

Grâce à cette caractéristique il n'est pas nécessaire d'utiliser un thermo-capillaire 52 en aval du réservoir tampon basse pression 2.

Pour démarrer le moteur, on ouvre la vanne de régulation 6, le gaz ionisable étant acheminé du réservoir tampon basse pression 2 vers l'anode 26 et la cathode 40.

Le moteur est mis sous tension par l'électronique de puissance 81, l'électronique d'allumage 82 produit une décharge d'allumage DA ce qui entraine comme de façon connue une décharge moteur DM entre l'anode 26 et la cathode 40.

Dans l'exemple de réalisation décrit ici, l'intensité nominale du courant de décharge entre l'anode 26 et la cathode 40 est de 1A.

La pression est mesurée en permanence dans le réservoir tampon basse pression 2 par le capteur de pression 54 et maintenue sensiblement constante (avec une tolérance de 5% dans cet exemple) et égale à une pression de consigne par le contrôle de l'ouverture de la vanne de régulation 6.

Le débit de gaz ionisable alimentant le moteur peut être ajusté en faisant varier cette pression de consigne. Dans l'exemple de réalisation décrit ici, la pression de consigne peut varier entre 1 et 2 bars.

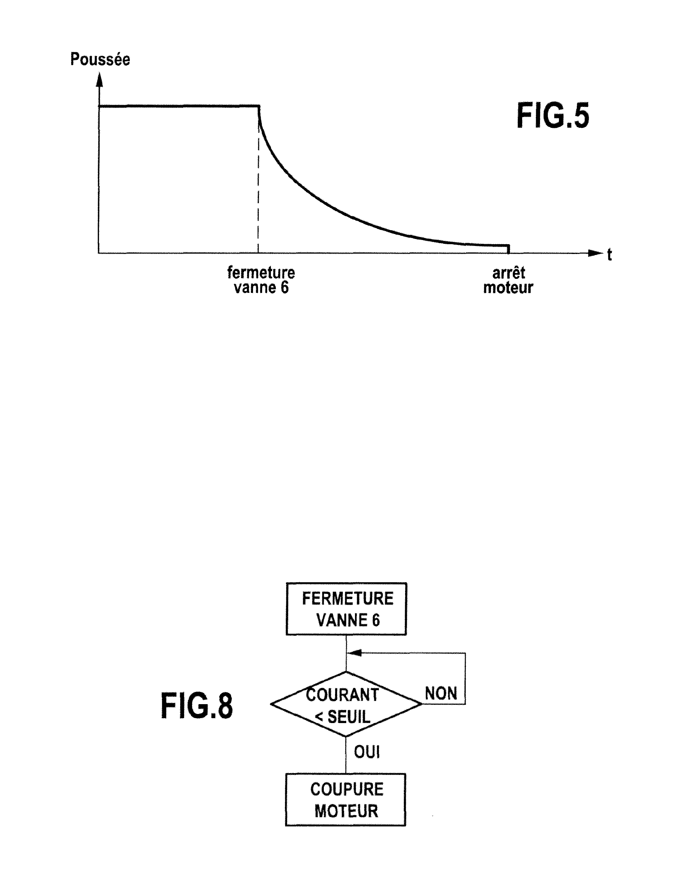

Comme représenté à la **figure 8**, pour arrêter le moteur, on commence par fermer la vanne de régulation 6 sans interrompre dans un premier temps l'électronique de puissance 81. Le réservoir tampon basse pression 2 se vide alors progressivement entraînant une diminution de l'intensité du courant de décharge.

Lorsque l'intensité du courant de décharge entre l'anode 26 et la cathode 40 devient inférieure à une valeur seuil, en l'espèce 1mA, l'électronique de puissance 81 coupe la tension de décharge entre l'anode 26 et la cathode 40.

Ceci entraîne une diminution progressive de la poussée du propulseur au fur et à mesure du vidage du réservoir tampon basse pression 2, selon l'expression de fonctionnement « blow down ».

Fort avantageusement, le volume du réservoir tampon basse pression 2 est dans cet exemple de 20 cm³ environ, de sorte que ce réservoir peut être intégré de façon compacte dans un satellite SAT onforme à l'invention tel que représenté à la **figure 6**, les unités PRG de régulation de pression et RDX de régulation de débit pouvant être intégrées.

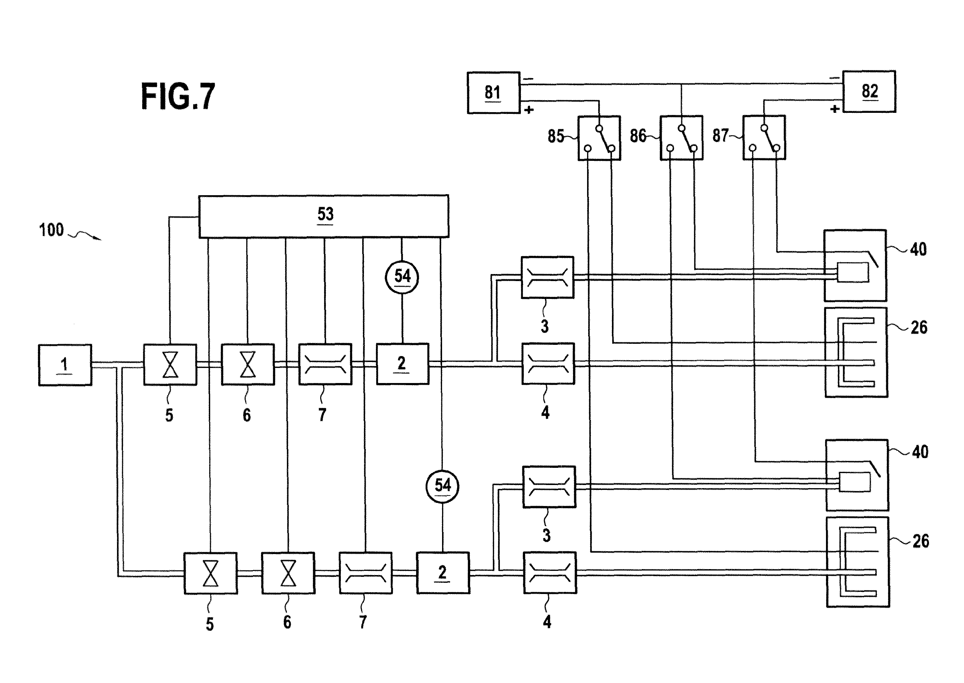

La **figure 7** illustre une mise en oeuvre de l'invention dans un système propulsif électrique comportant deux moteurs. Dans ce mode de réalisation, le propulseur comporte, en sortie du réservoir haute pression 1, deux vannes 5 permettant d'arrêter un moteur en arrêtant le débit de gaz ionisable s'écoulant vers le réservoir tampon basse pression s'écoulant vers ce moteur.

Dans le mode de réalisation décrit ici, des interrupteurs 85, 86 et 87 permettant d'établir une décharge d'allumage DA et une décharge moteur DM vers l'un ou l'autre moteur.

## Revendications

1. Propulseur électrique comportant :
- au moins un moteur électrique (10) comportant une anode (26), une cathode (40) et un distributeur de gaz ; et
- un système d'alimentation dudit moteur (10) comportant :
- un réservoir (1) haute pression de gaz ionisable ;
- un réservoir tampon basse pression (2) relié au réservoir haute pression via des moyens (5, 6, 7) de détente de la pression dudit gaz ;
- ledit réservoir tampon basse pression (2) étant en liaison ouverte avec ledit distributeur de gaz (26) ;
- au moins une vanne (5, 6) apte à ouvrir, fermer, ou réguler, le débit de gaz entre le réservoir haute pression (1) et le réservoir tampon basse pression (2) ;
- un système de canalisations pour acheminer le gaz du réservoir tampon basse pression (2) vers ledit moteur (10) ; et
- une électronique de puissance (81) apte à mettre ledit moteur sous et hors tension en appliquant ou en coupant une tension de charge (DM) entre l'anode (26) et la cathode (40) ;
ledit propulseur étant **caractérisé en ce qu'**il comporte :
- des moyens pour détecter que l'intensité du courant de décharge entre ladite anode (26) et ladite cathode (40) est inférieure à une valeur seuil et pour couper ladite tension de décharge (DM) suite à ladite détection.

2. Propulseur électrique selon la revendication 1 **caractérisée en ce que** ladite valeur seuil est de l'ordre de 1mA dans le cas d'un moteur lorsque la valeur nominale de l'intensité du courant de décharge est de l'ordre de 1A.

3. Propulseur électrique selon la revendication 1 ou 2 **caractérisé en ce qu'**il comporte un restricteur (7) entre ledit réservoir haute pression (1) et ledit réservoir tampon basse pression (2) et **en ce que** ledit réservoir tampon basse pression (2) a une capacité inférieure à 20 cm3.

4. Propulseur électrique selon l'une quelconque des revendications 1 à 3, **caractérisé en ce qu'**il comporte un organe (6) de régulation entre ledit réservoir (1) haute pression et ledit réservoir tampon basse pression (2) et des moyens de contrôle de cet organe permettant d'obtenir en sortie dudit réservoir tampon basse pression (2) une pression variant d'une amplitude de moins de 5% autour d'une pression de consigne.

5. Propulseur électrique selon la revendication 4 **caractérisé en ce que** ladite valeur moyenne est comprise entre 0,1 et 10 bars.

6. Satellite comportant un propulseur électrique selon l'une quelconque des revendications 1 à 5.

7. Procédé de contrôle d'un moteur électrique (10) comportant une anode (26), une cathode (40) et un distributeur de gaz (26), ledit moteur étant compris dans un propulseur électrique comportant en outre :
- un système d'alimentation dudit moteur (10), ce système d'alimentation (10) comportant :
- un réservoir (1) haute pression de gaz ionisable ;
- un réservoir tampon basse pression (2) relié au réservoir haute pression via des moyens (5, 6, 7) de détente de la pression dudit gaz et en liaison ouverte avec ledit distributeur de gaz (26) ;
- au moins une vanne (5, 6) apte à ouvrir, fermer, ou réguler, le débit de gaz entre le réservoir haute pression (1) et le réservoir tampon basse pression (2) ; et
- un système de canalisations pour acheminer le gaz du réservoir tampon basse pression (2) vers ledit distributeur de gaz (26) ; et
- une électronique de puissance (81) apte à mettre ledit moteur sous et hors tension en appliquant ou en coupant une tension de décharge (DM) entre l'anode (26) et la cathode (40) ;
ledit procédé étant **caractérisé en ce qu'**il comporte :
- une étape de fermeture de ladite vanne pour interrompre le débit de gaz entre le réservoir haute pression (1) et le réservoir tampon basse pression (2);
- une étape de détection d'une 'intensité du courant du décharge entre ladite anode (26) et ladite cathode (40) inférieure à une valeur seuil ; et
- une étape de coupure de ladite tension de décharge suite à ladite détection.

## Patentansprüche

1. Elektrischer Antrieb, umfassend:
- wenigstens einen Elektromotor (10), der eine Anode (26), eine Kathode (40) und einen Gasverteiler umfasst, und
- ein System zur Versorgung des Motors (10), umfassend:
- einen Hochdruckbehälter (1) mit ionisierbarem Gas,
- einen Niederdruckpufferbehälter (2), der mit dem Hochdruckbehälter über Mittel (5, 6, 7) zur Entlastung des Drucks des Gases verbunden ist,
- wobei der Niederdruckpufferbehälter (2) mit dem Gasverteiler (26) in offener Verbindung steht,
- wenigstens ein Ventil (5, 6), das geeignet ist, den Gasdurchfluss zwischen dem Hochdruckbehälter (1) und dem Niederdruckpufferbehälter (2) zu öffnen, zu schließen oder zu regulieren,
- ein Rohrleitungssystem zur Beförderung des Gases von dem Niederdruckpufferbehälter (2) zu dem Motor (10), und
- eine Leistungselektronik (81), die geeignet ist, den Motor durch Anlegen oder durch Abschalten einer Entladespannung (DM) zwischen der Anode (26) und der Kathode (40) unter Spannung und spannungsfrei zu setzen,
wobei der Antrieb **dadurch gekennzeichnet ist, dass** er umfasst:
- Mittel zum Erfassen, dass die Stärke des Entladestroms zwischen der Anode (26) und der Kathode (40) einen Schwellenwert unterschreitet, und zum Abschalten der Entladespannung (DM) im Anschluss an die Erfassung.

2. Elektrischer Antrieb nach Anspruch 1, **dadurch gekennzeichnet, dass** bei einem Motor der Schwellenwert in der Größenordnung von 1 mA liegt, wenn der Nennwert der Stärke des Entladestroms in der Größenordnung von 1 A liegt.

3. Elektrischer Antrieb nach Anspruch 1 oder 2, **dadurch gekennzeichnet, dass** er eine Drossel (7) zwischen dem Hochdruckbehälter (1) und dem Niederdruckpufferbehälter (2) umfasst und dass der Niederdruckpufferbehälter (2) eine Kapazität von weniger als 20 cm³ hat.

4. Elektrischer Antrieb nach einem der Ansprüche 1 bis 3, **dadurch gekennzeichnet, dass** er ein Regelungsorgan (6) zwischen dem Hochdruckbehälter (1) und dem Niederdruckpufferbehälter (2) sowie Mittel zur Steuerung dieses Organs umfasst, die ermöglichen, am Ausgang des Niederdruckpufferbehälters (2) einen Druck zu erhalten, der um eine Größe von weniger als 5 % um einen Solldruck herum schwankt.

5. Elektrischer Antrieb nach Anspruch 4, **dadurch gekennzeichnet, dass** der Mittelwert zwischen 0,1 und 10 bar liegt.

6. Satellit, der einen elektrischen Antrieb nach einem der Ansprüche 1 bis 5 umfasst.

7. Verfahren zur Steuerung eines Elektromotors (10), der eine Anode (26), eine Kathode (40) und einen Gasverteiler (26) umfasst, wobei der Motor in einem elektrischen Antrieb enthalten ist, der ferner umfasst:
- ein System zur Versorgung des Motors (10), wobei dieses Versorgungssystem umfasst:
- einen Hochdruckbehälter (1) mit ionisierbarem Gas,
- einen Niederdruckpufferbehälter (2), der mit dem Hochdruckbehälter über Mittel (5, 6, 7) zur Entlastung des Drucks des Gases verbunden ist und mit dem Gasverteiler (26) in offener Verbindung steht,
- wenigstens ein Ventil (5, 6), das geeignet ist, den Gasdurchfluss zwischen dem Hochdruckbehälter (1) und dem Niederdruckpufferbehälter (2) zu öffnen, zu schließen oder zu regulieren, und
- ein Rohrleitungssystem zur Beförderung des Gases von dem Niederdruckpufferbehälter (2) zu dem Gasverteiler (26), und
- eine Leistungselektronik (81), die geeignet ist, den Motor durch Anlegen oder durch Abschalten einer Entladespannung (DM) zwischen der Anode (26) und der Kathode (40) unter Spannung und spannungsfrei zu setzen,
wobei das Verfahren **dadurch gekennzeichnet ist, dass** es umfasst:
- einen Schritt zum Schließen des Ventils, um den Gasdurchfluss zwischen dem Hochdruckbehälter (1) und dem Niederdruckpufferbehälter (2) zu unterbrechen,
- einen Schritt zum Erfassen einer Stärke des Entladestroms zwischen der Anode (26) und der Kathode (40), die einen Schwellenwert unterschreitet, und
- einen Schritt zum Abschalten der Entladespannung im Anschluss an die Erfassung.

## Claims

1. An electric thruster comprising:
· at least one electric engine (10) having an anode (26), a cathode (40), and a gas manifold; and
· a feed system for said engine (10) comprising:
· a high-pressure tank (1) of ionizable gas;
· a low-pressure buffer tank (2) connected to the high-pressure tank by means (5, 6, 7) for dropping the pressure of said gas;
· said low-pressure buffer tank (2) being in open connection with said gas manifold (26);
· at least one valve (5, 6) suitable for opening, closing, or regulating the flow rate of gas between the high-pressure tank (1) and the low-pressure buffer tank (2);
· a system of pipes for conveying the gas from the low-pressure buffer tank (2) to said engine (10); and
· power electronics (81) suitable for delivering or not delivering electric power to said engine by applying or interrupting a discharge voltage (DM) between the anode (26) and the cathode (40);
said thruster being **characterized in that**:
· means for detecting that the magnitude of the discharge current between said anode (26) and said cathode (40) is less than a threshold value and for interrupting said discharge voltage (DM) as a result of making said detection.

2. An electric thruster according to claim 1, **characterized in that** said threshold value is about 1 mA for an engine when the nominal value of the magnitude of the discharge current is about 1 A.

3. An electric thruster according to claim 1 or claim 2, **characterized in that** it includes a restrictor (7) between said high-pressure tank (1) and said low-pressure buffer tank (2), and **in that** said low-pressure buffer tank (2) has a capacity of less than 20 cm³.

4. An electric thruster according to any one of claims 1 to 3, **characterized in that** it includes a regulator member (6) between said high-pressure tank (1) and said low-pressure buffer tank (2), together with means for controlling said member so as to obtain at the outlet from said low-pressure buffer tank (2) a pressure that varies in amplitude by less than 5% around a setpoint pressure.

5. An electric thruster according to claim 4, **characterized in that** said mean value lies in the range 0.1 bars to 10 bars.

6. A satellite including an electric thruster according to any one of claims 1 to 5.

7. A method of controlling an electric engine (10) having an anode (26), a cathode (40), and a gas manifold (26), said engine being included in an electric thruster that further comprises:
· a feed system for said engine (10), the feed system comprising:
· a high-pressure tank (1) of ionizable gas;
· a low-pressure buffer tank (2) connected to the high-pressure tank by means (5, 6, 7) for dropping the pressure of said gas, and in open connection with said gas manifold (26);
· at least one valve (5, 6) suitable for opening, closing, or regulating the flow rate of gas between the high-pressure tank (1) and the low-pressure buffer tank (2); and
· a system of pipes for conveying the gas from the low-pressure buffer tank (2) to said gas manifold (26); and
· power electronics (81) suitable for delivering or not delivering electric power to said engine by applying or interrupting a discharge voltage (DM) between the anode (26) and the cathode (40);
said method being **characterized in that** it comprises:
· a step of closing said valve to interrupt the flow of gas between the high-pressure tank (1) and the low-pressure buffer tank (2);
· a step of detecting a magnitude of the discharge current between said anode (26) and said cathode (40) that is lower than a threshold value; and
· a step of switching off said discharge voltage as a result of making said detection.
